# EUROPEAN PATENT SPECIFICATION

(11) **EP 4 646 636 B1**
(45) Date of publication and mention of the grant of the patent: **14.10.2026**
(21) Application number: 23728950.9
(22) Date of filing: 09.05.2023
(51) Int. Cl.: G06F 1/3234, G06F 1/3215, G06F 1/3209

(54) **REDUCED POWER CONSUMPTION BASED ON SYSTEM COMMUNICATION REQUIREMENTS FOR APPLICATIONS**
REDUZIERTER STROMVERBRAUCH AUF BASIS VON SYSTEMKOMMUNIKATIONSANFORDERUNGEN FÜR ANWENDUNGEN
CONSOMMATION D'ÉNERGIE RÉDUITE BASÉE SUR DES EXIGENCES DE COMMUNICATION DE SYSTÈME POUR DES APPLICATIONS

(43) Date of publication of application: 12.11.2025
(60) Divisional application: 26201833.6 / 4 822 491
(73) Proprietor: Google LLC, Mountain View, CA 94043 (US)
(72) Inventor: WANG, Jibing, Mountain View, CA 94043 (US); STAUFFER, Erik Richard, Mountain View, CA 94043 (US); GUARNA, Ignacio Agustin, Mountain View, CA 94043 (US); WOH, Mark, Mountain View, CA 94043 (US)
(74) Representative: Derry, Paul Stefan
(86) International application number: PCT/US2023/021478
(87) International publication number: WO 2024/232866

(56) References cited:
- US-A1- 2011 268 000
- US-A1- 2020 358 685
- US-A1- 2020 371 579
- US-A1- 2021 173 756
- US-B2- 8 370 662

## Description

### BACKGROUND

Mobile devices, such as smartphones, can consume a relatively large amount of power in a relatively short amount of time. Typically, power consumption at a mobile device can be attributed, at least in part, to hardware component activity. As a non-limiting example, a hardware component integrated into a mobile device such as a modulator-demodulator (modem) can operate at excessively high frequencies and power levels, which can greatly increase the power consumption by the mobile device and reduce an amount of existing battery life.

US 2020/371579 A1 describes a system including an interface circuit configured to provide an interface with a link, and a controller. The controller is configured to receive one or more bandwidth requests from one or more clients, and determine at least one of a link speed and a link width for the link based on the one or more bandwidth requests.

### SUMMARY

The matter for protection is defined by the appended claims.

An operating system of a mobile device may receive system communication requirements (e.g., application requirements, target application parameters, etc.) from one or more applications running on the mobile device. For example, in some scenarios, a particular application can send different system communication requirements to the operating system. The system communication requirements may include a throughput requirement for running the particular application on the mobile device, a latency requirement for running the particular application on the mobile device, etc. The operating system may send (e.g., forward) the system communication requirements to a different hardware component of the mobile device that facilitates operation of the particular application, such as a modulator-demodulator (modem). In response to the operating system sending the system communication requirements to the modem, the modem can provide feedback to the operating system. The feedback can identify available resources of the modem that can satisfy the system communication requirements, different operation modes for the modem, whether the operation mode of the modem can be adjusted to satisfy the system communication requirements, the current operation mode of the modem, etc.

Based on the feedback and the system communication requirements, the operating system can initiate adjustment of the operation mode of the modem to ensure that the system communication requirements are satisfied. As non-limiting examples, the operating system can adjust (or instruct the modem to adjust) an operational voltage/frequency of the modem to satisfy the system communication requirements, a power state of a peripheral component interconnect express (PCIe) interface to satisfy the system communication requirements, a lane configuration of the PCIe interface, etc. The above adjustments may reduce unnecessary power consumption at the mobile device, particularly if, prior to adjustment, resources of the modem were operating at unnecessarily high voltages and/or power states.

In a first example embodiment, a method of reducing power consumption at a mobile device includes accessing, by an operating system running on the mobile device, first system communication requirements associated with running a first application on the mobile device. The method also includes sending, by the operating system, the first system communication requirements to a modem of the mobile device. The method further includes adjusting an operation mode of the modem based on the first system communication requirements and based on feedback received from the modem in response to sending the first system communication requirements to the modem.

In a second example embodiment, a mobile device includes a system memory storing a set of instructions and a processor coupled to the system memory. The set of instructions are executable by the processor to run an operating system. The operating system is configured to access first system communication requirements associated with running a first application on the mobile device. The operating system is also configured to send the first system communication requirements to a modem of the mobile device. The operating system is further configured to initiate adjustment of an operation mode of the modem based on the first system communication requirements and based on feedback received from the modem in response to sending the first system communication requirements to the modem.

In a third example embodiment, a non-transitory computer-readable medium includes instructions corresponding to an operating system. The instructions, when executed by a processor, cause the processor to access first system communication requirements associated with running a first application on a mobile device. The instructions, when executed by the processor, further cause the processor to send the first system communication requirements to a modem of the mobile device. The instructions, when executed by the processor, also cause the processor to initiate adjustment of an operation mode of the modem based on the first system communication requirements and based on feedback received from the modem in response to sending the first system communication requirements to the modem.

In a fourth example embodiment, a system may include various means for carrying out each of the operations of the first example embodiment.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible.

### BRIEF DESCRIPTION OF THE DRAWINGS

Figure 1 illustrates a computing device, in accordance with examples described herein.
Figure 2 illustrates a computing system, in accordance with examples described herein.
Figure 3 illustrates a system operable to reduce power consumption, in accordance with examples described herein.
Figure 4 illustrates another system operable to reduce power consumption, in accordance with examples described herein.
Figure 5 illustrates a process for training a machine-learning model, in accordance with examples described herein.
Figure 6 is a diagram illustrating training and inference phases of a machine-learning model, in accordance with examples described herein.
Figure 7 illustrates a flow chart, in accordance with examples described herein.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example," "exemplary," and/or "illustrative" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

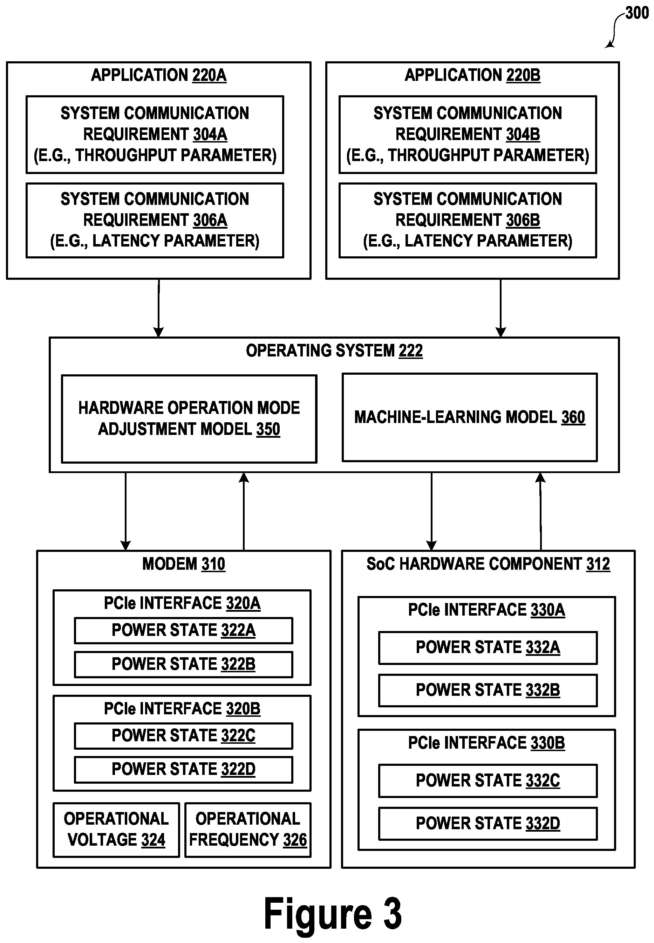

Particular embodiments are described herein with reference to the drawings. In the description, common features are designated by common reference numbers throughout the drawings. In some figures, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to Figure 3, multiple system communication requirements are illustrated and associated with reference numbers 304A and 304B. When referring to a particular one of these system communication requirements, such as the system communication requirement 304A, the distinguishing letter "A" is used. However, when referring to any arbitrary one of these system communication requirements or to these system communication requirements as a group, the reference number 304 is used without a distinguishing letter.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order. Unless otherwise noted, figures are not drawn to scale.

### I. Overview

An operating system of a mobile device may be configured to receive system communication requirements (e.g., application requirements, target application parameters, etc.) from one or more applications running on the mobile device. For a particular application, among other things, the system communication requirements may include a latency requirement for running the particular application on the mobile device or a throughput requirement for running the particular application on the mobile device. In response to receiving the system communication requirements from the one or more applications, the operating system can send (e.g., forward) the system communication requirements to one or more different hardware components, such as a modem and/or another system on chip (SoC) hardware component (e.g., a microprocessor, a memory, an analog-to-digital converter (ADC), an audio receiver, etc.). In response to receiving the system communication requirements from the operating system, the hardware component, such as the modem and/or another SoC hardware component, may provide feedback to the operating system indicating whether there is existing capacity to satisfy the system communication requirements, a current operation mode, processing capabilities in different operation modes, etc. Based on the feedback and the system communication requirements, the operation mode of the hardware component(s) can be adjusted to satisfy the system communication requirements.

In some examples, if the system communication requirements indicate that the particular application requires a relatively high throughput, the modem and/or another SoC hardware component can select an associated PCIe interface for the application that can satisfy the throughput requirement and does not have excess throughput capabilities, which may unnecessarily consume power. As a non-limiting example, the particular application may require a PCIe interface that has a throughput of 750 megabytes per second (MB/s). The modem may have a first PCIe interface having a throughput of approximately 2 gigabytes per second (GB/s), a second PCIe interface having a throughput of 1 GB/s, a third PCIe interface having a throughput of 500 MB/s, and a fourth PCIe interface having a throughput of 250 MB/s. In this scenario, the modem may select the second PCIe interface because it satisfies the throughput requirement for the particular application and does not have excess throughput capabilities, such as the first PCIe interface, which may unnecessarily consume power.

In some examples, dynamic voltage and frequency scaling (DVFS) can be implemented at the modem to satisfy the system communication requirements for the particular application. For example, if a speed-test application is running and the system communication requirements indicate a high throughput requirement, a higher operating voltage and frequency can be implemented at the modem to ensure the throughput capabilities of the modem satisfy high throughput requirement. However, if a media streaming application is running and the system communication requirements indicate a lower throughput requirement, a lower operating voltage and frequency can be implemented at the modem. By reducing the operating voltage and frequency implemented at the modem for applications that do not require high modem operating voltages and frequencies (e.g., media streaming applications), a reduction in power consumption may be realized compared to operating the modem at higher operating voltages and frequencies.

In some examples, a power state of a PCIe interface can be adjusted based on the system communication requirements. For example, if the system communication requirements indicate that the particular application is latency insensitive (e.g., has a latency requirement that is relatively high), the hardware component (e.g., the modem or another SoC hardware component) can transition the power state of a PCIe interface from a first power state (e.g., a high power state) to a second power state (e.g., a low power state). In this example, the first power state may have a first exit latency that is greater than a second exit latency of the second power state. However, if the second exit latency satisfies the latency requirement of the particular application, a reduction in power consumption may be realized compared to operating the PCIe interface in the first power state.

In some examples, the operating system can use a trained machine-learning model to predict the system communication requirements. For example, based on a task assigned to a particular application running on the mobile device, the operating system may predict a throughput requirement and/or a latency requirement necessary to perform the task. The prediction may be based on an aggregate of historical data associated with performing similar tasks. The operating system may forward the prediction to a hardware component (e.g., the modem and/or another SoC hardware component) and initiate adjustment of the hardware component(s), as described above, to reduce unnecessary power consumption.

### II. Example Computing Devices and Systems

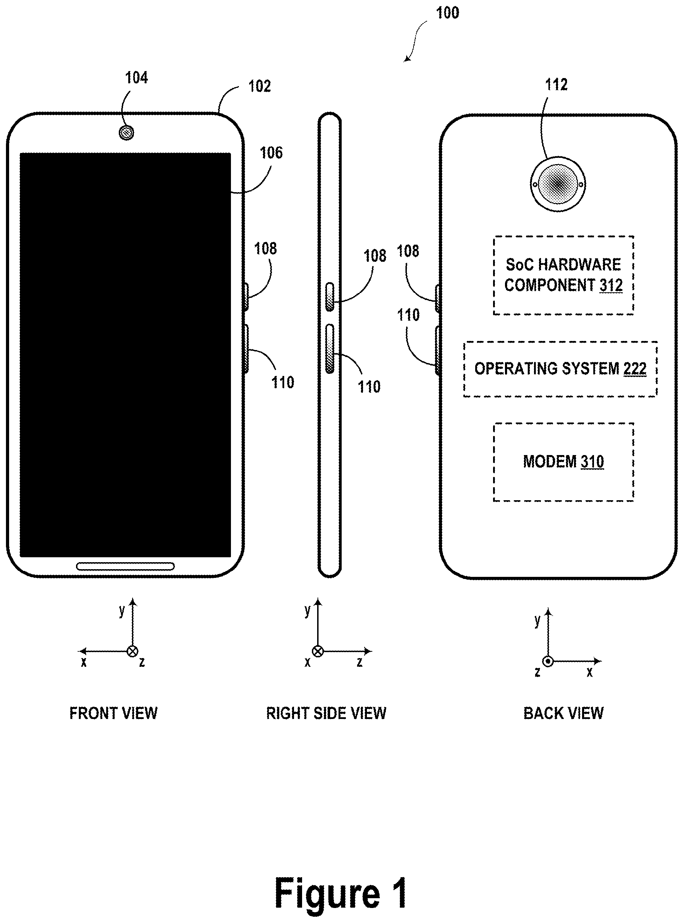

Figure 1 illustrates an example of a computing device 100. The computing device 100 is shown in the form factor of a mobile phone. However, the computing device 100 may be alternatively implemented as a laptop computer, a tablet computer, and/or a wearable computing device, among other possibilities. The computing device 100 may include various elements, such as a body 102, a display 106, and buttons 108, 110. The computing device 100 may further include one or more cameras, such as a front-facing camera 104 and a rear-facing camera 112.

The front-facing camera 104 may be positioned on a side of the body 102 typically facing a user while in operation (e.g., on the same side as the display 106). The rear-facing camera 112 may be positioned on a side of the body 102 opposite the front-facing camera 104. Referring to the cameras as front and rear facing is arbitrary, and the computing device 100 may include multiple cameras positioned on various sides of the body 102.

The display 106 could represent a cathode ray tube (CRT) display, a light emitting diode (LED) display, a liquid crystal (LCD) display, a plasma display, an organic light emitting diode (OLED) display, or any other type of display known in the art. In some examples, the display 106 may display a digital representation of the current image being captured by the front-facing camera 104 and/or the rear-facing camera 112, an image that could be captured by one or more of these cameras, an image that was recently captured by one or more of these cameras, and/or a modified version of one or more of these images. Thus, the display 106 may serve as a viewfinder for the cameras. The display 106 may also support touchscreen functions that may be able to adjust the settings and/or configuration of one or more aspects of the computing device 100.

The front-facing camera 104 may include an image sensor and associated optical elements such as lenses. The front-facing camera 104 may offer zoom capabilities or could have a fixed focal length. In other examples, interchangeable lenses could be used with the front-facing camera 104. The front-facing camera 104 may have a variable mechanical aperture and a mechanical and/or electronic shutter. The front-facing camera 104 also could be configured to capture still images, video images, or both. Further, the front-facing camera 104 could represent, for example, a monoscopic camera, a stereoscopic camera, or a multiscopic camera. The rear-facing camera 112 may be similarly or differently arranged. Additionally, one or more of the front-facing camera 104 and/or the rear-facing camera 112 may be an array of one or more cameras.

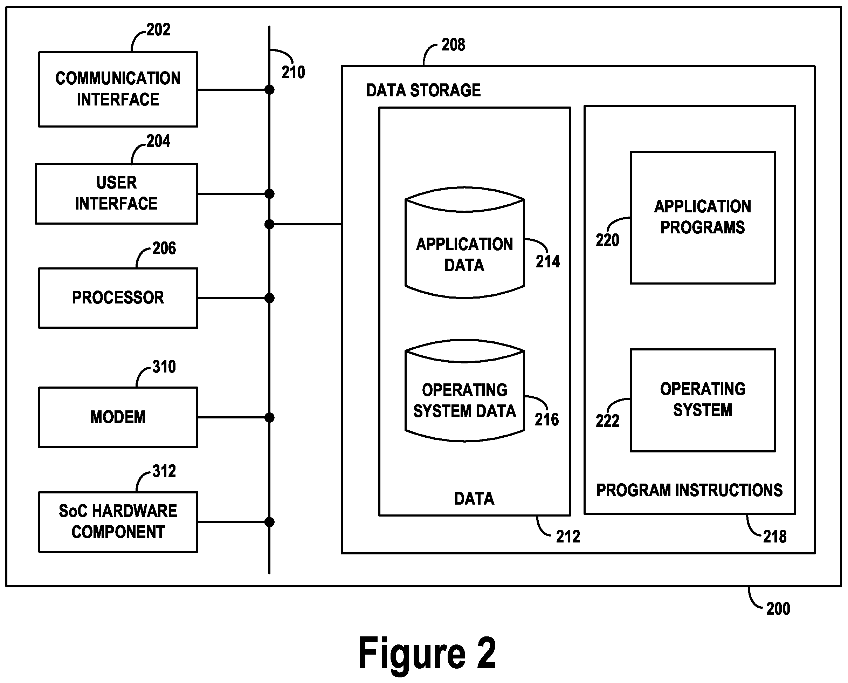

The computing device 100 can include an operating system 222, a modem 310, and at least one additional SoC hardware component 312. The SoC hardware component 312 can correspond to a microprocessor, a memory, an analog-to-digital converter (ADC), an audio receiver, etc. In Figure 1, the operating system 222, the modem 310, and the SoC hardware component 312 are integrated into internal circuitry of the computing device 100 and are not readily visible to the user. As described in greater detail with respect to Figure 2, the operating system 222 can correspond to a set of program instructions that are executable by a processor. As described in greater detail with respect to Figure 3, the operating system 222 can be configured to access application requirements, such as throughput and latency, for different applications and adjust the operating mode of the modem 310 and/or the SoC hardware component 312 to satisfy the application requirements in a manner that reduces power consumption at the computing device 100.

Figure 2 is a simplified block diagram showing some of the components of an example computing system 200. By way of example and without limitation, the computing system 200 may be a cellular mobile telephone (e.g., a smartphone), a computer (such as a desktop, notebook, tablet, server, or handheld computer), a home automation component, a digital video recorder (DVR), a digital television, a remote control, a wearable computing device, a gaming console, a robotic device, a vehicle, or some other type of device. The computing system 200 may represent, for example, aspects of the computing device 100.

As shown in Figure 2, the computing system 200 may include a communication interface 202, a user interface 204, a processor 206, the modem 310, the SoC hardware component 312, a data storage 208, all of which may be communicatively linked together by a system bus, network, or other connection mechanism 210.

The communication interface 202 may allow the computing system 200 to communicate, using analog or digital modulation, with other devices, access networks, and/or transport networks. Thus, the communication interface 202 may facilitate circuit-switched and/or packet-switched communication, such as plain old telephone service (POTS) communication and/or Internet protocol (IP) or other packetized communication. For instance, the communication interface 202 may include a chipset and antenna arranged for wireless communication with a radio access network or an access point. Also, the communication interface 202 may take the form of or include a wireline interface, such as an Ethernet, Universal Serial Bus (USB), or High-Definition Multimedia Interface (HDMI) port, among other possibilities. The communication interface 202 may also take the form of or include a wireless interface, such as a Wi-Fi, BLUETOOTH^{®}, global positioning system (GPS), or wide-area wireless interface (e.g., WiMAX or 3GPP Long-Term Evolution (LTE)), among other possibilities. However, other forms of physical layer interfaces and other types of standard or proprietary communication protocols may be used over the communication interface 202. Furthermore, the communication interface 202 may comprise multiple physical communication interfaces (e.g., a Wi-Fi interface, a BLUETOOTH^{®} interface, and a wide-area wireless interface).

The user interface 204 may function to allow the computing system 200 to interact with a human or non-human user, such as to receive input from a user and to provide output to the user. Thus, the user interface 204 may include input components such as a keypad, keyboard, touch-sensitive panel, computer mouse, trackball, joystick, microphone, and so on. The user interface 204 may also include one or more output components such as a display screen, which, for example, may be combined with a touch-sensitive panel. The display screen may be based on CRT, LCD, LED, and/or OLED technologies, or other technologies now known or later developed. User interface 204 may also be configured to generate audible output(s), via a speaker, speaker jack, audio output port, audio output device, earphones, and/or other similar devices. The user interface 204 may also be configured to receive and/or capture audible utterance(s), noise(s), and/or signal(s) by way of a microphone and/or other similar devices.

In some examples, the user interface 204 may include a display that serves as a viewfinder for still camera and/or video camera functions supported by the computing system 200. Additionally, the user interface 204 may include one or more buttons, switches, knobs, and/or dials that facilitate the configuration and focusing of a camera function and the capturing of images. It may be possible that some or all of these buttons, switches, knobs, and/or dials are implemented by way of a touch-sensitive panel.

The processor 206 may comprise one or more general purpose processors - e.g., microprocessors - and/or one or more special purpose processors - e.g., digital signal processors (DSPs), graphics processing units (GPUs), floating point units (FPUs), network processors, or application-specific integrated circuits (ASICs). In some instances, special purpose processors may be capable of image processing, image alignment, and merging images, among other possibilities. The data storage 208 may include one or more volatile and/or non-volatile storage components, such as magnetic, optical, flash, or organic storage, and may be integrated in whole or in part with the processor 206. The data storage 208 may include removable and/or non-removable components.

The processor 206 may be capable of executing program instructions 218 (e.g., compiled or non-compiled program logic and/or machine code) stored in the data storage 208 to carry out the various functions described herein. Therefore, the data storage 208 may include a non-transitory computer-readable medium, having stored thereon program instructions that, upon execution by the computing system 200, cause the computing system 200 to carry out any of the methods, processes, or operations disclosed in this specification and/or the accompanying drawings. The execution of the program instructions 218 by the processor 206 may result in the processor 206 using the data 212.

By way of example, the program instructions 218 may include the operating system 222 (e.g., an operating system kernel, device driver(s), and/or other modules) and one or more application programs 220 (e.g., camera functions, address book, email, web browsing, social networking, audio-to-text functions, text translation functions, and/or gaming applications) installed on the computing system 200. Similarly, the data 212 may include the operating system data 216 and the application data 214. The operating system data 216 may be accessible primarily to the operating system 222, and the application data 214 may be accessible primarily to one or more of the application programs 220. The application data 214 may be arranged in a file system that is visible to or hidden from a user of the computing system 200.

The application programs 220 may communicate with the operating system 222 through one or more application programming interfaces (APIs). These APIs may facilitate, for instance, the application programs 220 reading and/or writing the application data 214, transmitting or receiving information via the communication interface 202, receiving and/or displaying information on the user interface 204, and so on.

In some cases, the application programs 220 may be referred to as "applications" or as "apps" for short. Additionally, the application programs 220 may be downloadable to the computing system 200 through one or more online application stores or application markets. However, the application programs 220 can also be installed on the computing system 200 in other ways, such as via a web browser or through a physical interface (e.g., a USB port) on the computing system 200.

The modem 310 may be operable to convert data from a digital format into a format that is suitable for analog transmission. The modem 310 may transmit data by modulating one or more carrier wave signals to encode digital information. As described in greater detail with respect to Figure 3, the modem 310 can include one or more PCIe interfaces that can operate in different states (e.g., a low power state or a high power state). Additionally, the modem 310 can operate at different voltages and frequencies based on requirements of the application programs 220.

The SoC hardware component 312 can correspond to a microprocessor, a memory, an analog-to-digital converter (ADC), an audio receiver, etc. Similar to the modem 310, the SoC hardware component 312 can include one or more PCIe interfaces that can operate in different states (e.g., a low power state or a high power state).

As described below, the operating system 222 can initiate adjustment of an operation mode of the modem 310 and/or the SoC hardware component 312 based on requirements (e.g., throughput and latency requirements) of the application programs 220 running on the computing system 200.

### III. Example Power Consumption Reduction Systems

Figure 3 illustrates an example system 300 that is operable to reduce mobile device power consumption based on application information. According to one implementation, one or more components of the computing system 200 of Figure 2 can be integrated into the system 300. As a non-limiting example, the operating system 222 of Figure 2, the modem 310 of Figure 2, and the SoC hardware component 312 of Figure 2 are integrated into the system 300. According to another implementation, the system 300 can be integrated into the computing device 100 of Figure 1. As described below, the system 300 can be operable to reduce power consumption at the computing device 100 (e.g., a mobile device).

The system 300 includes the operating system 222, the modem 310, and at least one additional SoC hardware component 312. The SoC hardware component 312 can correspond to a microprocessor, a memory, an analog-to-digital converter (ADC), an audio receiver, etc. The operating system 222 can be implemented by a processor, such as the processor 206, executing a set of instructions (e.g., the program instructions 218). As described below, in an effort to facilitate power savings at a mobile device, the operating system 222 can analyze application information (e.g., application requirements), send the application information to the modem 310 and/or the SoC hardware component 312, receive feedback indicating available resource information at the modem 310 and/or the SoC hardware component 312, and designate power-efficient resources to satisfy the application requirements.

In the embodiment of Figure 3, the system 300 can support one or more applications 220A, 220B running on a mobile device, such as the computing device 100. The applications 220A, 220B can correspond to the application programs 220. Each application 220A, 220B can have one or more system communication requirements 304, 306. For example, as illustrated in Figure 3, the application 220A can have a system communication requirement 304A and a system communication requirement 306A, and the application 220B can have a system communication requirement 304B and a system communication requirement 306B. The system communication requirements 304, 306 can correspond to target application requirements for running the corresponding applications 220A, 220B on the mobile device. As non-limiting examples, the system communication requirement 304A can correspond to a target throughput parameter (e.g., a throughput requirement) for running the application 220A on the mobile device, and the system communication requirement 306A can correspond to a target latency parameter (e.g., a latency requirement) for running the application 220A. Similarly, the system communication requirement 304B can correspond to a target throughput parameter (e.g., a throughput requirement) for running the application 220B on the mobile device, and the system communication requirement 306B can correspond to a target latency parameter (e.g., a latency requirement) for running the application 220B. It should be understood that throughput and latency are non-limiting examples of system communication requirements (e.g., target parameters) and should not be construed as limiting examples. In other implementations, the applications 220A, 220B can have different communication requirements.

Although two applications 220A, 220B are illustrated, it should be understood that the system 300, and the corresponding mobile device, can support additional (or fewer) applications. As a non-limiting example, in one implementation, the system 300 can support ten applications. As another non-limiting example, in one implementation, the system 300 supports a single application. Additionally, it should be understood that each application 220A, 220B can have additional (or fewer) system communication requirements. As a non-limiting example, according to one implementation, the application 220A can have five system communication requirements. As another non-limiting example, according to one implementation, the application 220B can have a single system communication requirement.

The operating system 222 can be configured to access the system communication requirements 304A, 306A associated with running the application 220A on the mobile device. According to one implementation, the application 220A can send the system communication requirements 304A, 306A to the operating system 222, as described with respect to Figure 2, such that the operating system 222 receives the system communication requirements 304A, 306A directly from the application 220A. Similarly, the operating system 222 can be configured to access the system communication requirements 304B, 306B associated with running the application 220B on the mobile device.

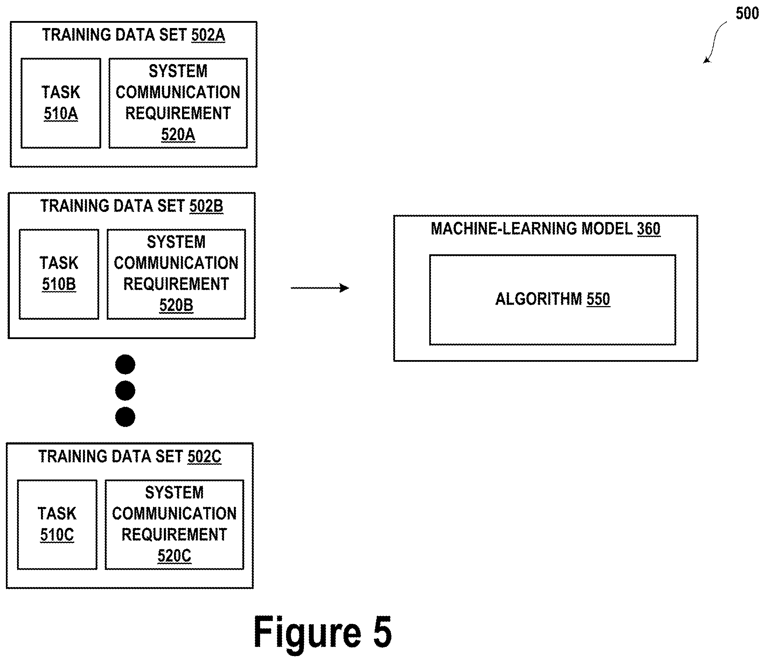

According to some implementations, accessing the system communication requirements 304, 306 can include predicting the system communication requirements 304, 306 based on one or more particular tasks associated with the applications 220. To illustrate, the operating system 222 can identify tasks associated with different applications 220A, 220B. A task can include media streaming operations, speed testing operations, etc. Based on the identified task, the operating system 222 can use a trained machine-learning model 360 to predict the system communication requirements 304, 306 based on historical parameters (e.g., requirements) associated with performing a similar task or based on training data, as described in greater detail with respect to Figure 5. To illustrate, if the operating system 222 identifies the application 220A as a media streaming application, using the machine-learning model 360, the operating system 222 can predict a throughput requirement for media streaming applications and assign the predicted throughput requirement as the system communication requirement 304A. Similarly, using the machine-learning model 360, the operating system 222 can predict a latency requirement for media streaming applications and assign the predicted latency requirement as the system communication requirement 306A.

In response to accessing the system communication requirements 304, 306, the operating system 222 can send (e.g., forward) the system communication requirements 304, 306 to a hardware component. For example, the operating system 222 can send one or more of the system communication requirements 304, 306 to the modem 310, and the operating system 222 can send one or more of the system communication requirements 304, 306 to the SoC hardware component 312. As described below, an operation mode of the modem 310 and/or an operation mode of the SoC hardware component 312 can be adjusted to ensure the system communication requirements 304, 306 are satisfied while simultaneously preserving battery power by limiting operation at unnecessarily high voltages and/or power states.

As illustrated in Figure 3, the modem 310 includes a PCIe interface 320A and a PCIe interface 320B. Although two PCIe interfaces 320 are depicted in Figure 3, in other implementations, the modem 310 can include additional PCIe interfaces or other bus interfaces. In the embodiment of Figure 3, the PCIe interface 320A can operate in a power state 322A (e.g., a low power state) or a power state 322B (e.g., a high power state). Each power state 322A, 322B can have a different exit latency. For example, the power state 322A can have a first exit latency that is different from (e.g., lower than) the second exit latency of the power state 322B. Similarly, in the embodiment of Figure 3, the PCIe interface 320B can operate in a power state 322C (e.g., a low power state) or a power state 322D (e.g., a high power state). Each power state 322C, 322D can have a different exit latency. For example, the power state 322C can have a first exit latency that is different from (e.g., lower than) the second exit latency of the power state 322D.

According to some implementations, the PCIe interfaces 320 can have different throughput limitations, latency limitations, lane configurations, etc. As a non-limiting example, the PCIe interface 320A may have a throughput of approximately 2 GB/s while operating in the power state 322B (e.g., the high power state) and may have a throughput of approximately 1.5 GB/s while operating in the power state 322A (e.g., the low power state). As another non-limiting example, the PCIe 320B interface may a have throughput of approximately 1 GB/s while operating in the power state 322D (e.g., the high power state) and may have a throughput of approximately 500 MB/s while operating in the power state 322C (e.g., the low power state), It should be understood that the above examples are not intended to be limiting and merely represent that the throughput of the PCIe interfaces 320 can be variable based on power states, lane configurations, and other properties.

The modem 310 can also have a variable operational voltage 324 and operational frequency 326. For example, DVFS can be implemented at the modem 310 to dynamically adjust the operational voltage 324 and the operational frequency 326. Adjusting the operational voltage and frequency 324, 326 can cause the modem 310 to operate in different modes. For example, by scaling down the voltage and frequency 324, 326, the modem 310 can operate in a low power mode. Conversely, by scaling up the voltage and frequency 324, 326, the modem 310 can operate in a high power mode.

As illustrated in Figure 3, the SoC hardware component 312 includes a PCIe interface 330A and a PCIe interface 330B. Although two PCIe interfaces 330 are depicted in Figure 3, in other implementations, the SoC hardware component 312 can include additional PCIe interfaces or other bus interfaces. In the embodiment of Figure 3, the PCIe interface 330A can operate in a power state 332A (e.g., a low power state) or a power state 332B (e.g., a high power state). Each power state 332A, 332B can have a different exit latency. For example, the power state 332A can have a first exit latency that is different from (e.g., lower than) the second exit latency of the power state 332B. Similarly, in the embodiment of Figure 3, the PCIe interface 330B can operate in a power state 332C (e.g., a low power state) or a power state 332D (e.g., a high power state). Each power state 332C, 332D can have a different exit latency. For example, the power state 332C can have a first exit latency that is different from (e.g., lower than) the second exit latency of the power state 332D.

According to some implementations, the PCIe interfaces 330 can have different throughput limitations, latency limitations, lane configurations, etc. As a non-limiting example, the PCIe interface 330A may have a throughput of approximately 500 MB/s while operating in the power state 332B (e.g., the high power state) and may have a throughput of approximately 425 MB/s while operating in the power state 332A (e.g., the low power state). As another non-limiting example, the PCIe interface 330B may a have throughput of approximately 250 MB/s while operating in the power state 332D (e.g., the high power state) and may have a throughput of approximately 100 MB/s while operating in the power state 332C (e.g., the low power state), It should be understood that the above examples are not intended to be limiting and merely represent that the throughput of the PCIe interfaces 330 can be variable based on power states, lane configurations, and other properties.

The modem 310 and/or the SoC hardware component 312 can be configured to provide feedback to the operating system 222 in response to receiving the system communication requirements 304, 306. The feedback can indicate resource information of the corresponding hardware (e.g., available resources, power consumption associated with the available resources, latency constraints of the available resources, throughput constraints of the available resources, power state configuration of the available resources, etc.) For example, in response to receiving one or more of the system communication requirements 304, 306, the modem 310 can send feedback to the operating system 222 indicating whether the modem 310 has the capability of satisfying the parameters 304, 306, different operation modes for the modem 310, processing capabilities for the modem 310 in each operation mode, etc. Similarly, in response to receiving one or more of the system communication requirements 304, 306, the SoC hardware component 312 can send feedback to the operating system 222 indicating whether the SoC hardware component 312 has the capability of satisfying the parameters 304, 306, different operation modes for the SoC hardware component 312, processing capabilities for the SoC hardware component 312 in each operation mode, etc.

Based on the system communication requirements 304, 306 and the feedback (e.g., feedback from the modem 310 and/or feedback from the SoC hardware component 312), the operating system 222 can be configured to initiate an adjustment of an operation mode for the modem 310 and/or the SoC hardware component 312. To illustrate, the operating system 222 includes a hardware operation mode adjustment model 350 that can be configured to initiate an adjustment of an operation mode for the modem 310 and/or the SoC hardware component 312.

One example of adjusting the operation mode of a hardware component includes transitioning a PCIe interface 320, 330 from a first power state to a second power state. As a non-limiting example, the hardware operation mode adjustment model 350 can send a command to the modem 310 to transition (e.g., change) the power state 322 of one of the PCIe interfaces 320. The hardware operation mode adjustment model 350 can initiate adjustment of the power state 322 of one of the PCIe interfaces 320 based on the one or more system communication requirements 304, 306. As a non-limiting example, the system communication requirement 306A may indicate that the application 220A has a latency requirement of 20 ms. The feedback from the modem 310 (to the operating system 222) can indicate that the PCIe interface 320A has an exit latency of 20 milliseconds (ms) in the power state 322A (e.g., the low power state) and has an exit latency of 10 ms in the power state 322B (e.g., the high power state). Based on this feedback, the hardware operation mode adjustment model 350 can send a command to the modem 310 to transition the PCI interface 320A from the power state 322B to the power state 322A, as the low power state 322A will support the system communication requirement 306A while reducing power consumption (as compared to the PCIe interface 320A operating in the high power state 322B). Thus, if the application 220A is latency insensitive (e.g., has a latency requirement between 20 ms and 30 ms), to conserve power, the operating system 222 can instruct the modem 310 to transition the power state of the PCIe interface 320A to the lowest power state (e.g. the power state 322A) that meets the latency requirement.

Although the above example was directed to transitioning the power state 322 of a PCIe interface 320 of the modem 310, the operating system 222 can perform similar operations to transition the power state 332 of a PCIe interface 330 of the SoC hardware component 312 based on application information. As a non-limiting example, the system communication requirement 306B may indicate that the application 220B has a latency requirement of 15 ms. The feedback from the SoC hardware component 312 (to the operating system 222) can indicate that the PCIe interface 330A has an exit latency of 20 ms in the power state 332A (e.g., the low power state) and has an exit latency of 10 ms in the power state 332B (e.g., the high power state). Based on this feedback, the hardware operation mode adjustment model 350 can send a command to the SoC hardware component to transition the PCI interface 330A from the power state 332A to the power state 322B, as the low power state 332A will not support the system communication requirement 306B.

However, if there are additional PCIe interfaces 330 that can satisfy the system communication requirement 306B while consuming a lower amount of power, the operating system 222 can instruct the SoC hardware component to select one of the additional PCIe interfaces 330. As a non-limiting example, if the feedback from the SoC hardware component 312 indicates that the PCIe interface 330B has an exit latency of 15 ms in the power state 332C (e.g., the low power state), the hardware operation mode adjustment model can send a command to the SoC hardware component to use the PCIe interface 330B in the low power state 332C, as the low power state 332C of the PCIe interface 330B will support the system communication requirement 306B while reducing power consumption (as compared to the PCIe interface 330A operating in the high power state 332B).

According to some implementations, the hardware operation mode adjustment model 350 can be configured to select PCIe interfaces 320, 330 based on throughput requirements for the applications 220A, 220B. For example, based on the system communication requirement 304A, the operating system 222 can determine a throughput parameter associated with running the application 220A on the mobile device. Based on the throughput parameter, the operating system 222 can select at least one PCIe interface 320, 330 from a plurality of PCIe interfaces to use for the application 220A. As a non-limiting example, to reduce power consumption, in response to the throughput parameter failing to satisfy a throughput threshold (e.g., failing to exceed the throughput threshold), the operating system 222 may select a single PCIe interface for use in association with the application 220A. To illustrate, for the modem 310, the operating system 222 may select to use the PCIe interface 320A for the application 220A and bypass use of the PCIe interface 320B to reduce power consumption. Similarly, for the SoC hardware component 312, the operating system 222 may select to use the PCIe interface 330A for the application 220A and bypass use of the PCIe interface 330B to reduce power consumption. Thus, the system 300 can reduce power consumption by selectively reducing the amount of PCIe interfaces used at the modem 310 and the SoC hardware component 312 when there is a relatively low throughput requirement.

However, in response to the throughput parameter satisfying the throughput threshold (e.g., exceeding the throughput threshold), the operating system 222 may select multiple PCIe interfaces for the application 220A. To illustrate, for the modem 310, the operating system 222 may select to use the PCIe interface 320A and the PCIe interface 320B for the application 220A if use of a single PCIe interface (e.g., the PCIe interface 320A) would not satisfy the throughput requirement for the application 220A. Similarly, for the SoC hardware component 312, the operating system 222 may select to use the PCIe interface 330A and the PCIe interface 330B for the application 220A if use of a single PCIe interface (e.g., the PCIe interface 330A) would not satisfy the throughput requirement for the application 220A.

Another example of adjusting the operation mode of a hardware component includes using DVFS to adjust the operational voltage 324 and the operational frequency 326 of the modem 310. As a non-limiting example, the system communication requirement 304A may indicate a throughput requirement for the application 220A, and the operating system 222 can send (e.g., forward) the throughput requirement to the modem 310. The feedback from the modem 310 (to the operating system 222) can indicate one or more operational voltages and frequencies 324, 326 for the modem 310 that would enable the modem 310 to satisfy the throughput requirement for the application 220A. Based on the feedback, the hardware operation mode adjustment model 350 can select a target operational voltage and frequency 324, 326 for the modem 310. According to some examples, the target operational voltage and frequency 324, 326 can correspond to the lowest operational voltage and frequency 324, 326 whereby the throughput requirement for the application 220A is satisfied.

The selected operational voltage and frequency 324, 326 can be based on the types of application 220A, 220B running on the mobile device. For example, if the application 220A is a speed-test application and the system communication requirement 304A indicates a high throughput requirement, a higher operational voltage and frequency 324, 326 can be implemented at the modem 310 to ensure the throughput capabilities of the modem 310 satisfy high throughput requirement. However, if the application 220A is a media streaming application and the system communication requirement 304A indicates a lower throughput requirement, a lower operational voltage and frequency 324, 326 can be implemented at the modem 310. By reducing the operational voltage and frequency 324, 326 implemented at the modem 310 for applications that do not require high operational voltages and frequencies (e.g., media streaming applications), a reduction in power consumption may be realized compared to operating the modem 310 at higher operating voltages and frequencies.

In scenarios where additional applications are running on the mobile device, such as the application 220B, the hardware operation mode adjustment model 350 can select a target operational voltage and frequency 324, 326 for the modem 310 that enables the modem 310 to meet the throughput requirements for each application. For example, if the system communication requirement 304B indicates that the application 220B also has a relatively high throughput requirement, the hardware operation mode adjustment model 350 can select the lowest operational voltage and frequency 324, 326 for the modem 310 that enables the modem 310 to satisfy the throughput requirements for both applications 220A, 220B.

Thus, in some implementations, the operating system 222 can be configured to adjust the operating modes of the hardware components (e.g., the modem 310 and the SoC hardware component 312) to concurrently satisfy the system communication requirements 304, 306 of multiple applications 220. In these implementations, the operating system 222 can use the feedback from the hardware components to allocate available resources of the hardware components in a manner that ensures the system communication requirements 304, 306 for each application 220 is satisfied using the most power-efficient resources.

The techniques described with respect to the system 300 of Figure 3 may reduce unnecessary power consumption at a mobile device based on application information. In particular, the system 300 utilizes the operating system 222 to analyze application requirements (e.g., the system communication requirements 304, 306) and adjust operating modes of hardware components (e.g., the modem 310 and/or the SoC hardware component 312) to satisfy the application requirements while operating at a relatively high degree of efficiency.

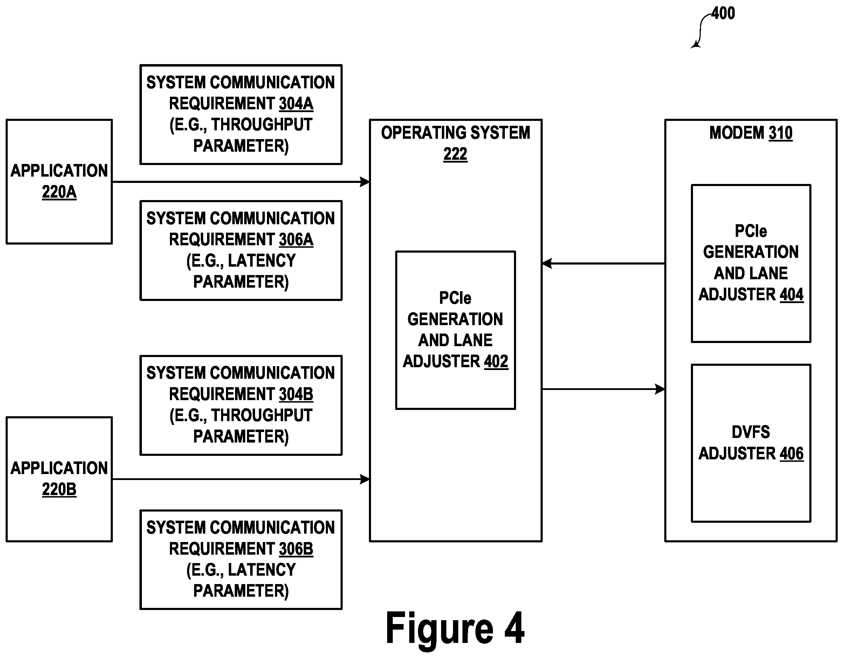

Figure 4 illustrates another example system 400 that is operable to reduce mobile device power consumption based on application information. The system 400 includes the operating system 222 and the modem 310. The application 220A can send the system communication requirements 304A, 306A (e.g., the throughput and latency requirements) to the operating system 222, and the application 220B can send the system communication requirements 304B, 306B (e.g., the throughput and latency requirements) to the operating system 222.

Based on the system communication requirements 304, 306, the operating system 222 can determine a PCIe generation and lane configuration to satisfy the throughput and latency requirements of the applications 220. For example, the operating system 222 can include a PCIe generation and lane adjuster 402 to determine, based on the system communication requirements 304, 306, whether to use a Generation 4 PCIe configuration, a Generation 3 PCIe configuration, a Generation 2 PCIe configuration, or a Generation 1 PCIe configuration. Additionally, the PCIe generation and lane adjuster 402 can determine whether to use a single lane configuration or a multiple lane configuration.

According to some implementations, the operating system 222 can send the system communication requirements 304A, 306A to the modem 310, and the modem 310 can determine a PCIe generation and lane configuration to satisfy the throughput and latency requirements of the applications 220. For example, the modem 310 can include a PCIe generation and lane adjuster 402 to determine, based on the system communication requirements 304, 306, whether to use a Generation 4 PCIe configuration, a Generation 3 PCIe configuration, a Generation 2 PCIe configuration, or a Generation 1 PCIe configuration. Additionally, the PCIe generation and lane adjuster 402 can determine whether to use a single lane configuration or a multiple lane configuration.

Additionally, the modem 310 can include a DVFS adjuster 406. The DVFS adjuster 406 can be configured to dynamically adjust the operational voltage 324 and the operational frequency 326 of the modem 310 based on the system communication requirements 304, 306. Adjusting the operational voltage and frequency 324, 326 can cause the modem 310 to operate in different modes. For example, by scaling down the voltage and frequency 324, 326, the modem 310 can operate in a low power mode when one or more applications 220 have a low throughput requirement to conserve power. Conversely, by scaling up the voltage and frequency 324, 326, the modem 310 can operate in a high power mode when one or more applications 220 have a high throughput requirement.

### IV. Example Machine-Learning Process For Predicting System Communication Requirements

Figure 5 provides an example process 500 for the predicting system communication requirements based on tasks assigned to applications.

According to the process 500, training data sets 502 can be compiled and provided to the machine-learning model 360. To illustrate, a training data set 502A includes a task 510A and a corresponding system communication requirement 520A associated with performing the task 510A. For example, if the task 510A is streaming media, the corresponding system communication requirement 520A can indicate a required throughput or latency to stream media. Additionally, a training data set 502B includes a task 510B and a corresponding system communication requirement 520B associated with performing the task 510B, and a training data set 502C includes a task 510C and a corresponding system communication requirement 520C associated with performing the task 510C. Although three training data sets 502 are illustrated, it should be understood that the machine-learning model 360 can be generated using additional training data sets 502. As non-limiting examples, hundreds or thousands of training data sets 502 can be compiled to generate the machine-learning model 360.

An algorithm 550 can be generated (e.g., built) based on the training data sets 502. The algorithm 550 can be used to predict a system communication requirement 520 for a given task 510 based on the training data set 502. The machine-learning model 360 can use the algorithm 550 to predict the system communication requirements 304, 306 based on the task associated with the applications 220.

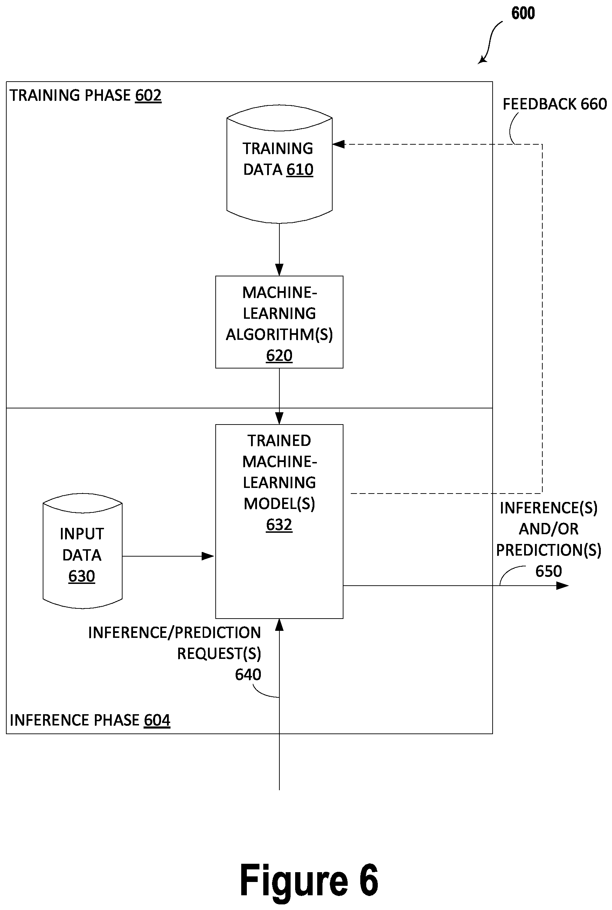

Figure 6 shows a diagram 600 illustrating a training phase 602 and an inference phase 604 of trained machine-learning model(s) 632, in accordance with example embodiments. According to some examples, the trained machine-learning model(s) 632 can correspond to the machine-learning model 360. Some machine-learning techniques involve training one or more machine-learning algorithms on an input set of training data to recognize patterns in the training data and provide output inferences and/or predictions about (patterns in the) training data. The resulting trained machine-learning algorithm can be termed as a trained machine-learning model. For example, Figure 6 shows the training phase 602 where machine-learning algorithm(s) 620 are being trained on training data 610 to become trained machine-learning model(s) 632. Then, during the inference phase 604, the trained machine-learning model(s) 632 can receive input data 630 and one or more inference/prediction requests 640 (perhaps as part of the input data 630) and responsively provide as an output one or more inferences and/or prediction(s) 650.

As such, the trained machine-learning model(s) 632 can include one or more models of machine-learning algorithm(s) 620. The machine-learning algorithm(s) 620 may include, but are not limited to: an artificial neural network (e.g., a herein-described convolutional neural networks, a recurrent neural network, a Bayesian network, a hidden Markov model, a Markov decision process, a logistic regression function, a support vector machine, a suitable statistical machine-learning algorithm, and/or a heuristic machine-learning system). The machine-learning algorithm(s) 620 may be supervised or unsupervised, and may implement any suitable combination of online and offline learning.

In some examples, the machine-learning algorithm(s) 620 and/or the trained machine-learning model(s) 632 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up the machine-learning algorithm(s) 620 and/or the trained machine-learning model(s) 632. In some examples, the trained machine-learning model(s) 632 can be trained, reside and execute to provide inferences on a particular computing device, and/or otherwise can make inferences for the particular computing device.

During the training phase 602, the machine-learning algorithm(s) 620 can be trained by providing at least the training data 610 as training input using unsupervised, supervised, semi-supervised, and/or reinforcement learning techniques. Unsupervised learning involves providing a portion (or all) of the training data 610 to the machine-learning algorithm(s) 620 and the machine-learning algorithm(s) 620 determining one or more output inferences based on the provided portion (or all) of the training data 610. Supervised learning involves providing a portion of the training data 610 to the machine-learning algorithm(s) 620, with the machine-learning algorithm(s) 620 determining one or more output inferences based on the provided portion of the training data 610, and the output inference(s) are either accepted or corrected based on correct results associated with the training data 610. In some examples, supervised learning of the machine-learning algorithm(s) 620 can be governed by a set of rules and/or a set of labels for the training input, and the set of rules and/or set of labels may be used to correct inferences of the machine-learning algorithm(s) 620.

Semi-supervised learning involves having correct results for part, but not all, of the training data 610. During semi-supervised learning, supervised learning is used for a portion of the training data 610 having correct results, and unsupervised learning is used for a portion of the training data 610 not having correct results. Reinforcement learning involves the machine-learning algorithm(s) 620 receiving a reward signal regarding a prior inference, where the reward signal can be a numerical value. During reinforcement learning, the machine-learning algorithm(s) 620 can output an inference and receive a reward signal in response, where the machine-learning algorithm(s) 620 are configured to try to maximize the numerical value of the reward signal. In some examples, reinforcement learning also utilizes a value function that provides a numerical value representing an expected total of the numerical values provided by the reward signal over time. In some examples, the machine-learning algorithm(s) 620 and/or the trained machine-learning model(s) 632 can be trained using other machine-learning techniques, including but not limited to, incremental learning and curriculum learning.

In some examples, the machine-learning algorithm(s) 620 and/or the trained machine-learning model(s) 632 can use transfer learning techniques. For example, transfer learning techniques can involve the trained machine-learning model(s) 632 being pre-trained on one set of data and additionally trained using the training data 610. More particularly, the machine-learning algorithm(s) 620 can be pre-trained on data from one or more computing devices and a resulting trained machine-learning model provided to a particular computing device, where the particular computing device is intended to execute the trained machine-learning model during the inference phase 604. Then, during the training phase 602, the pre-trained machine-learning model can be additionally trained using the training data 610, where the training data 610 can be derived from kernel and non-kernel data of the particular computing device. This further training of the machine-learning algorithm(s) 620 and/or the pre-trained machine-learning model using the training data 610 of the particular computing device's data can be performed using either supervised or unsupervised learning. Once the machine-learning algorithm(s) 620 and/or the pre-trained machine-learning model has been trained on at least the training data 610, the training phase 602 can be completed. The trained resulting machine-learning model can be utilized as at least one of the trained machine-learning model(s) 632.

In particular, once the training phase 602 has been completed, the trained machine-learning model(s) 632 can be provided to a computing device, if not already on the computing device. The inference phase 604 can begin after the trained machine-learning model(s) 632 are provided to the particular computing device.

During the inference phase 604, the trained machine-learning model(s) 632 can receive the input data 630 and generate and output one or more corresponding inferences and/or prediction(s) 650 about the input data 630. As such, the input data 630 can be used as an input to the trained machine-learning model(s) 632 for providing corresponding inference(s) and/or prediction(s) 650 to kernel components and non-kernel components. For example, the trained machine-learning model(s) 632 can generate inference(s) and/or prediction(s) 650 in response to one or more inference/prediction requests 640. In some examples, the trained machine-learning model(s) 632 can be executed by a portion of other software. For example, the trained machine-learning model(s) 632 can be executed by an inference or prediction daemon to be readily available to provide inferences and/or predictions upon request. The input data 630 can include data from the particular computing device executing the trained machine-learning model(s) 632 and/or input data from one or more computing devices other than the particular computing device.

The input data 630 can include different tasks, such as the tasks 510. Other types of input data are possible as well. Inference(s) and/or prediction(s) 650 can include one or more system communication requirements 520 for a given task 510. Inference(s) and/or prediction(s) 650 can include other output data produced by the trained machine-learning model(s) 632 operating on the input data 630 (and the training data 610). In some examples, the trained machine-learning model(s) 632 can use output inference(s) and/or prediction(s) 650 as input feedback 660. The trained machine-learning model(s) 632 can also rely on past inferences as inputs for generating new inferences.

Convolutional neural networks and/or deep neural networks used herein can be an example of the machine-learning algorithm(s) 620. After training, the trained version of a convolutional neural network can be an example of the trained machine-learning model(s) 632. In this approach, an example of the one or more inference/prediction requests 640 can be a request to predict one or more system communication requirements 520.

### V. Additional Example Operations

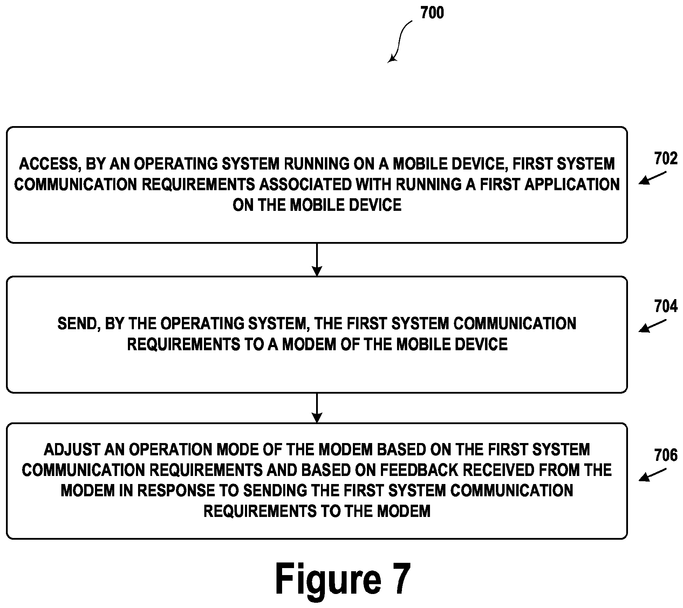

Figure 7 illustrates a flow chart of a method 700 related to a new technology. The method 700 may be carried out by the computing device 100, the computing system 200, and/or the system 300 among other possibilities. The embodiments of Figure 7 may be simplified by the removal of any one or more of the features shown therein. Further, these embodiments may be combined with features, aspects, and/or implementations of any of the previous figures or otherwise described herein.

The method 700 includes accessing, by an operating system running on a mobile device, first system communication requirements associated with running a first application on the mobile device, at block 702. For example, referring to Figure 3, the operating system 222 can access the system communication requirements 304A, 306A associated with running the application 220A on the computing device 100.

The method 700 also includes sending, by the operating system, the first system communication requirements to a modem of the mobile device, at block 704. For example, referring to Figure 3, the operating system 222 can send the system communication requirements 304A, 306A to the modem 310.

The method 700 further includes adjusting an operation mode of the modem based on the first system communication requirements and based on feedback received from the modem in response to sending the first system communication requirements to the modem, at block 706. For example, referring to Figure 3, the operation mode of the modem 310 can be adjusted based on the system communication requirements 304A, 306A and based on feedback received, by the operating system 222, from the modem 310.

In some embodiments, adjusting the operation mode of the modem includes transitioning, for the first application, a PCIe interface from a first power state into a second power state. The first power state may have a first exit latency that is different from a second exit latency of the second power state. As a non-limiting example, the PCIe interface 320A can transition from the power state 322B (e.g., the high power state) to the power state 322A (e.g., the low power state). The power state 322B has an exit latency that is different from (e.g., greater than) the exit latency of the power state 322A.

In some embodiments, the PCIe interface is associated with a modem or another SoC hardware component. For example, referring to Figure 3, the PCIe interfaces 320A, 320B are associated with the modem 310, and the PCIe interfaces 330A, 330B are associated with the SoC hardware component 312.

In some embodiments, adjusting the operation mode of the modem includes determining, based on the first system communication requirements, a throughput parameter associated with running the first application on the mobile device. For example, referring to Figure 3, the operating system 222 can determine the throughput parameter (e.g., the throughput requirement) associated with running the application 220A on the mobile device based on the system communication requirement 304A. In these embodiments, adjusting the operation mode can further include selecting, for the first application, at least one PCIe interface from a plurality of PCIe interfaces based on the throughput parameter. For example, referring to Figure 3, at least one PCIe interface 320, 330 can be selected, for the application 220A, based on the throughput parameter (e.g., the system communication requirement 304A).

In some embodiments, a single PCIe interface is selected from the plurality of PCIe interfaces in response to the throughput parameter failing to satisfy a throughput threshold. As a non-limiting example, referring to Figure 3, a single PCIe interface 320A can be selected from the plurality of PCIe interfaces 320 in response to the throughput parameter (e.g., the system communication requirement 304A) for the application 220A failing to satisfy (e.g., failing to exceed) a throughput threshold.

In some embodiments, multiple PCIe interfaces are selected from the plurality of PCIe interfaces in response to the throughput parameter satisfying a throughput threshold. For example, referring to Figure 3, multiple PCIe interfaces 320A, 320B can be selected from the plurality of PCIe interfaces 320 in response to the throughput parameter (e.g., the system communication requirement 304A) for the application 220A satisfying (e.g., exceeding) the throughput threshold.

In some embodiments, adjusting the operation mode of the modem can include determining, based on the first system communication requirements, a latency parameter associated with running the first application on the mobile device and transitioning, for the first application, a PCIe interface of the modem into a low power state. The low power state may have an exit latency that satisfies the latency parameter. For example, referring to Figure 3, the operating system 222 can determine, based on the system communication requirement 306A, a latency parameter associated with running the application 220A on the mobile device. The PCIe interface 320A of the modem 310 can be transitioned into the power state 322A (e.g., the low power state) if the power state 322A has an exit latency that satisfies the latency parameter.

In some embodiments, adjusting the operation mode of the modem includes adjusting an operational voltage of the modem and an operational frequency of the modem. For example, referring to Figure 3, the operational voltage and frequency 324, 326 of the modem 310 can be scaled to satisfy the application operation parameters 304, 306 of the application 220A.

In some embodiments, accessing the first system communication requirements includes receiving the first system communication requirements from the first application. For example, referring to Figure 3, the operating system 222 can receive the system communication requirements 304A, 306A from the application 220A. In some embodiments, the application 220A can communicate with the operating system 222 through one or more APIs.

In some embodiments, method 700 includes accessing, by the operating system, second application parameters associated with running a second application on the mobile device. For example, referring to Figure 3, the operating system 222 can access the system communication requirements 304B, 306B associated with running the application 220B on the mobile device. The method 700 can also include sending, by the operating system, the second system communication requirements to the modem. For example, referring to Figure 3, the operating system 222 can send the system communication requirements 304B, 306B to the modem 310 and/or the SoC hardware component 312. In these embodiments, the operation mode for the hardware component can be further adjusted based on the second system communication requirements 304B, 306B.

In some embodiments, the first system communication requirements are predicted by the operating system based on a particular task assigned to the first application. In some embodiments, the operating system uses machine-learning to predict the first system communication requirements.

### VI. Conclusion

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical operations or actions in the method or technique. The program code and/or related data may be stored on any type of computer readable medium such as a storage device including random access memory (RAM), a disk drive, a solid state drive, or another storage medium.

The computer readable medium may also include non-transitory computer readable media such as computer readable media that store data for short periods of time like register memory, processor cache, and RAM. The computer readable media may also include non-transitory computer readable media that store program code and/or data for longer periods of time. Thus, the computer readable media may include secondary or persistent long term storage, like read only memory (ROM), optical or magnetic disks, solid state drives, compact-disc read only memory (CD-ROM), for example. The computer readable media may also be any other volatile or non-volatile storage systems. A computer readable medium may be considered a computer readable storage medium, for example, or a tangible storage device.

Moreover, a step or block that represents one or more information transmissions may correspond to information transmissions between software and/or hardware modules in the same physical device. However, other information transmissions may be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for the purpose of illustration and are not intended to be limiting, with the true scope being indicated by the following claims.

## Claims

1. A method (700) comprising an operating system (222) running on a mobile device (100) performing:
accessing (702) first system communication requirements (304A, 306A) associated with running a first application (220A) on the mobile device;
sending (704) the first system communication requirements to a modulator-demodulator, modem (310), of the mobile device; and
adjusting (706) an operation mode of the modem based on the first system communication requirements and based on feedback received from the modem in response to sending the first system communication requirements to the modem, the feedback including multiple operation modes of the modem, by:
selecting, based on the first system communication requirements, one of the operation modes of the modem; and
initiating the selected one of the operation modes of the modem.

2. The method of claim 1, wherein adjusting the operation mode of the modem comprises:
transitioning, for the first application, a peripheral component interconnect express, PCIe, interface (320A, 320B) from a first power state (322A, 322C) into a second power state (322B, 322D), the first power state having a first exit latency that is different from a second exit latency of the second power state.

3. The method of claim 2, wherein the PCIe interface is associated with the modem.

4. The method of claim 1, wherein adjusting the operation mode of the modem comprises:
determining, based on the first system communication requirements, a throughput parameter associated with running the first application on the mobile device; and
selecting, for the first application, at least one peripheral component interconnect express, PCIe, interface from a plurality of PCIe interfaces based on the throughput parameter.

5. The method of claim 4, wherein a single PCIe interface is selected from the plurality of PCIe interfaces in response to the throughput parameter failing to satisfy a throughput threshold.

6. The method of claim 4, wherein multiple PCIe interfaces are selected from the plurality of PCIe interfaces in response to the throughput parameter satisfying a throughput threshold.

7. The method of claim 1, wherein adjusting the operation mode of the modem comprises:
determining, based on the first system communication requirements, a latency parameter associated with running the first application on the mobile device; and
transitioning, for the first application, a peripheral component interconnect express, PCIe, interface of the modem into a low power state, the low power state having an exit latency that satisfies the latency parameter.

8. The method of claim 1, wherein adjusting the operation mode of the modem comprises:
adjusting an operational voltage of the modem and an operational frequency of the modem.

9. The method of claim 1, wherein accessing the first system communication requirements comprises receiving the first system communication requirements from the first application.

10. The method of claim 1, further comprising:
accessing, by the operating system, second system communication requirements (304B, 306B) associated with running a second application (220B) on the mobile device; and
sending, by the operating system, the second system communication requirements to the modem,
wherein the operation mode for the modem is further adjusted based on the second system communication requirements.

11. The method of claim 1, wherein the first system communication requirements are predicted by the operating system based on a particular task associated with the first application.

12. The method of claim 11, wherein the operating system uses a trained machine-learning model (360) to predict the first system communication requirements based on the particular task associated with the first application.

13. A mobile device (100) comprising:
a modulator-demodulator, modem (310);
a system memory (208) storing a set of instructions; and
at least one processor (206) coupled to the system memory, wherein the set of instructions are executable by the at least one processor to run an operating system (222), and wherein the operating system is configured to perform the method of any one of the preceding claims.

14. Computer program instructions of an operating system (222), optionally stored on a non-transitory computer-readable medium, the instructions, when executed by the at least one processor (206) of the mobile device (100) of claim 13, (100), causing the at least one processor to perform the method of any one of claims 1 to 12.

## Patentansprüche

1. Verfahren (700), umfassend, dass ein auf einer Mobilvorrichtung (100) laufendes Betriebssystem (222) Folgendes durchführt:
Zugreifen (702) auf erste Systemkommunikationsanforderungen (304A, 306A), die mit dem Ausführen einer ersten Anwendung (220A) auf der Mobilvorrichtung assoziiert sind;
Senden (704) der ersten Systemkommunikationsanforderungen an einen Modulator-Demodulator, Modem, (310) der Mobilvorrichtung; und
Anpassen (706) eines Betriebsmodus des Modems basierend auf den ersten Systemkommunikationsanforderungen und basierend auf einer von dem Modem als Reaktion auf das Senden der ersten Systemkommunikationsanforderungen an das Modem empfangenen Rückmeldung, wobei die Rückmeldung mehrere Betriebsmodi des Modems beinhaltet, durch:
Auswählen, basierend auf den ersten Systemkommunikationsanforderungen, eines der Betriebsmodi des Modems; und
Initiieren des ausgewählten Betriebsmodus des Modems.

2. Verfahren nach Anspruch 1, wobei Anpassen des Betriebsmodus des Modems umfasst:
Überführen, für die erste Anwendung, einer Peripheral-Component-Interconnect-Express-(PCIe-)Schnittstelle (320A, 320B) von einem ersten Energiezustand (322A, 322C) in einen zweiten Energiezustand (322B, 322D), wobei der erste Energiezustand eine erste Austrittslatenz aufweist, die sich von einer zweiten Austrittslatenz des zweiten Energiezustands unterscheidet.

3. Verfahren nach Anspruch 2, wobei die PCIe-Schnittstelle mit dem Modem assoziiert ist.

4. Verfahren nach Anspruch 1, wobei Anpassen des Betriebsmodus des Modems umfasst:
Bestimmen, basierend auf den ersten Systemkommunikationsanforderungen, eines Durchsatzparameters, der mit dem Ausführen der ersten Anwendung auf der Mobilvorrichtung assoziiert ist; und
Auswählen, für die erste Anwendung, mindestens einer Peripheral-Component-Interconnect-Express-(PCIe-)Schnittstelle aus einer Mehrzahl von PCIe-Schnittstellen basierend auf dem Durchsatzparameter.

5. Verfahren nach Anspruch 4, wobei eine einzelne PCIe-Schnittstelle aus der Mehrzahl von PCIe-Schnittstellen ausgewählt wird als Reaktion darauf, dass der Durchsatzparameter einen Durchsatzschwellenwert nicht erfüllt.

6. Verfahren nach Anspruch 4, wobei mehrere PCIe-Schnittstellen aus der Mehrzahl von PCIe-Schnittstellen ausgewählt werden als Reaktion darauf, dass der Durchsatzparameter einen Durchsatzschwellenwert erfüllt.

7. Verfahren nach Anspruch 1, wobei Anpassen des Betriebsmodus des Modems umfasst:
Bestimmen, basierend auf den ersten Systemkommunikationsanforderungen, eines Latenzparameters, der mit dem Ausführen der ersten Anwendung auf der Mobilvorrichtung assoziiert ist; und
Überführen, für die erste Anwendung, einer Peripheral-Component-Interconnect-Express-(PCIe-)Schnittstelle des Modems in einen niedrigen Energiezustand, wobei der niedrige Energiezustand eine Austrittslatenz aufweist, die den Latenzparameter erfüllt.

8. Verfahren nach Anspruch 1, wobei Anpassen des Betriebsmodus des Modems umfasst:
Anpassen einer Betriebsspannung des Modems und einer Betriebsfrequenz des Modems.

9. Verfahren nach Anspruch 1, wobei Zugreifen auf die ersten Systemkommunikationsanforderungen Empfangen der ersten Systemkommunikationsanforderungen von der ersten Anwendung umfasst.

10. Verfahren nach Anspruch 1, ferner umfassend:
Zugreifen, durch das Betriebssystem, auf zweite Systemkommunikationsanforderungen (304B, 306B), die mit dem Ausführen einer zweiten Anwendung (220B) auf der Mobilvorrichtung assoziiert sind; und
Senden, durch das Betriebssystem, der zweiten Systemkommunikationsanforderungen an das Modem,
wobei der Betriebsmodus für das Modem ferner basierend auf den zweiten Systemkommunikationsanforderungen angepasst wird.

11. Verfahren nach Anspruch 1, wobei die ersten Systemkommunikationsanforderungen durch das Betriebssystem basierend auf einer bestimmten Aufgabe, die mit der ersten Anwendung assoziiert ist, vorhergesagt werden.

12. Verfahren nach Anspruch 11, wobei das Betriebssystem ein trainiertes Modell für maschinelles Lernen (360) verwendet, um die ersten Systemkommunikationsanforderungen basierend auf der bestimmten Aufgabe, die mit der ersten Anwendung assoziiert ist, vorherzusagen.

13. Mobilvorrichtung (100), umfassend:
einen Modulator-Demodulator, Modem, (310);
einen Systemspeicher (208), der einen Satz von Anweisungen speichert; und
mindestens einen Prozessor (206), der mit dem Systemspeicher gekoppelt ist, wobei der Satz von Anweisungen durch den mindestens einen Prozessor ausführbar ist, um ein Betriebssystem (222) auszuführen, und wobei das Betriebssystem dazu konfiguriert ist, das Verfahren nach einem der vorhergehenden Ansprüche durchzuführen.

14. Computerprogrammanweisungen eines Betriebssystems (222), optional gespeichert auf einem nichtflüchtigen computerlesbaren Medium, wobei die Anweisungen bei Ausführung durch den mindestens einen Prozessor (206) der Mobilvorrichtung (100) nach Anspruch 13, (100), den mindestens einen Prozessor veranlassen, das Verfahren nach einem der Ansprüche 1-12 durchzuführen.

## Revendications

1. Procédé (700) comprenant un système d'exploitation (222) qui fonctionne sur un dispositif mobile (100) réalisant :
l'accès (702) aux premières exigences de communication du système (304A, 306A) associées à l'exécution d'une première application (220A) sur le dispositif mobile ;
l'envoi (704) des premières exigences de communication du système à un modulateur-démodulateur, modem (310), du dispositif mobile ; et
l'ajustement (706) d'un mode de fonctionnement du modem sur la base des premières exigences de communication du système et sur la base des retours reçus du modem en réponse à l'envoi des premières exigences de communication du système au modem, le retour comportant plusieurs modes de fonctionnement du modem, par :
la sélection, sur la base des exigences de communication du premier système, d'un des modes de fonctionnement du modem ; et
le lancement du mode de fonctionnement sélectionné du modem.

2. Procédé selon la revendication 1, dans lequel l'ajustement du mode de fonctionnement du modem comprend :
la transition, pour la première application, d'une interface d'interconnexion express de composants périphériques, PCIe, (320A, 320B) d'un premier état d'alimentation (322A, 322C) vers un second état d'alimentation (322B, 322D), le premier état d'alimentation ayant une première latence de sortie différente d'une seconde latence de sortie du second état d'alimentation.

3. Procédé selon la revendication 2, dans lequel l'interface PCIe est associée au modem.

4. Procédé selon la revendication 1, dans lequel l'ajustement du mode de fonctionnement du modem comprend :
la détermination, sur la base des premières exigences de communication du système, d'un paramètre de débit associé à l'exécution de la première application sur le dispositif mobile ; et
la sélection, pour la première application, d'au moins une interface d'interconnexion express de composants périphériques, PCIe, parmi une pluralité d'interfaces PCIe sur la base du paramètre de débit.

5. Procédé selon la revendication 4, dans lequel une seule interface PCIe est sélectionnée parmi la pluralité d'interfaces PCIe en réponse au fait que le paramètre de débit ne satisfait pas un seuil de débit.

6. Procédé selon la revendication 4, dans lequel plusieurs interfaces PCIe sont sélectionnées parmi la pluralité d'interfaces PCIe en réponse au fait que le paramètre de débit satisfait un seuil de débit.

7. Procédé selon la revendication 1, dans lequel l'ajustement du mode de fonctionnement du modem comprend :
la détermination, sur la base des premières exigences de communication du système, d'un paramètre de latence associé à l'exécution de la première application sur le dispositif mobile ; et
la transition, pour la première application, d'une interface d'interconnexion express de composants périphériques, PCIe, du modem vers un état basse consommation, l'état basse consommation ayant une latence de sortie qui satisfait le paramètre de latence.

8. Procédé selon la revendication 1, dans lequel l'ajustement du mode de fonctionnement du modem comprend :
l'ajustement d'une tension de fonctionnement du modem et d'une fréquence de fonctionnement du modem.

9. Procédé selon la revendication 1, dans lequel l'accès aux premières exigences de communication du système comprend la réception des premières exigences de communication du système à partir de la première application.

10. Procédé selon la revendication 1, comprenant en outre :
l'accès, par le système d'exploitation, aux exigences de communication du second système (304B, 306B) associées à l'exécution d'une seconde application (220B) sur le dispositif mobile ; et
l'envoi, par le système d'exploitation, des exigences de communication du second système au modem,
dans lequel le mode de fonctionnement du modem est en outre ajusté sur la base des exigences de communication du second système.

11. Procédé selon la revendication 1, dans lequel les premières exigences de communication du système sont prédites par le système d'exploitation sur la base d'une tâche particulière associée à la première application.

12. Procédé selon la revendication 11, dans lequel le système d'exploitation utilise un modèle d'apprentissage automatique entraîné (360) pour prédire les premières exigences de communication du système sur la base de la tâche particulière associée à la première application.

13. Dispositif mobile (100) comprenant :
un modulateur-démodulateur, modem (310) ;
une mémoire système (208) stockant un ensemble d'instructions ; et
au moins un processeur (206) couplé à la mémoire système, dans lequel l'ensemble d'instructions est exécutable par l'au moins un processeur pour exécuter un système d'exploitation (222), et dans lequel le système d'exploitation est configuré pour exécuter le procédé selon l'une quelconque des revendications précédentes.

14. Instructions de programme informatique d'un système d'exploitation (222), éventuellement stockées sur un support lisible par ordinateur non transitoire, les instructions, lorsqu'elles sont exécutées par au moins un processeur (206) du dispositif mobile (100) selon la revendication 13, (100), amenant l'au moins un processeur à exécuter le procédé selon l'une quelconque des revendications 1 à 12.
